# EUROPÄISCHE PATENTSCHRIFT

(11) **EP 4 045 999 B1**
(45) Veröffentlichungstag und Bekanntmachung des Hinweises auf die Patenterteilung: **29.11.2023**
(21) Anmeldenummer: 20796492.5
(22) Anmeldetag: 13.10.2020
(51) Int. Cl.: G06F 1/3206, G06F 1/3234

(54) **VERFAHREN ZUM VORGEBEN EINER LEISTUNGSGRENZE EINES PROZESSORS**
METHOD FOR SPECIFYING A POWER LIMIT OF A PROCESSOR
PROCÉDÉ DE SPÉCIFICATION D'UNE LIMITE DE PUISSANCE D'UN PROCESSEUR

(30) Priorität: 17.10.2019 DE 102019128074
(43) Veröffentlichungstag der Anmeldung: 24.08.2022
(73) Patentinhaber: Fujitsu Technology Solutions GmbH, 80807 München (DE)
(72) Erfinder: FELDE, Waldemar, 80807 München (DE); HÄUSSERMANN, Rudolf, 80807 München (DE); STAUDE, Rainer, 80807 München (DE)
(74) Vertreter: Epping - Hermann - Fischer
(86) Internationale Anmeldenummer: PCT/EP2020/078795
(87) Internationale Veröffentlichungsnummer: WO 2021/074160

(56) Entgegenhaltungen:
- DE-B3-102018 112 607
- US-A1- 2008 222 435
- US-A1- 2016 179 110

## Beschreibung

Die Erfindung betrifft ein Verfahren zum Vorgeben einer Leistungsgrenze eines Prozessors eines Computersystems. Ferner betrifft die Erfindung ein Computersystem mit einem Prozessor und mit weiteren Systemkomponenten.

Prozessoren (zentrale Recheneinheiten, CPUs) verfügen in der Regel über ein Leistungsmanagement, bei dem unter anderem ein oder mehrere Leistungsbereiche, sogenannte Power Limits, vorgegeben werden. Diese Leistungsbereiche (und ggf. dazugehörige Zeitfenster) definieren einen Betrieb der Prozessoren in verschiedenen Betriebssituationen. Da Prozessoren erhebliche Leistungsspitzen (Leistungspeaks, sogenannte "Turbo Peaks") aufweisen können, werden sie mit Hilfe einer Leistungsgrenze begrenzt, um eine Stromversorgung und/oder eine Kühllösung eines Computersystems, in dem die Prozessoren eingesetzt werden, nicht zu überlasten.

Diese Leistungsgrenze eines Prozessors muss jedoch derart konservativ ausgelegt werden, dass zusätzliche Verbraucher beziehungsweise Lasten in einem Computersystem berücksichtigt werden können, ohne die Stromversorgung und/oder Kühllösung zu überlasten. Dies hat oftmals den Nachteil, dass die Leistungsgrenze zu konservativ eingestellt wird und ein Prozessor auch dann in seiner Leistung begrenzt wird, wenn keine oder nur geringe zusätzlichen Lasten im System vorliegen. Dies beeinflusst eine Performanz des Systems negativ.

Bisherige Lösungen sehen vor, ein sogenanntes "PROC Hot-Signal" auszulösen, falls ein Systemstrom (oder eine Systemleistung) einen festgelegten Wert überschreitet. In diesem Fall wird die Performanz des Prozessors drastisch herabgesetzt. Nachteile solcher Lösungen sind ein massiver Eingriff in die Performanz des Prozessors, zum Teil unnötig starke Begrenzungen der Prozessorleistung, eine relativ lange Zeitdauer, in der der Prozessor aus dem Zustand herabgesetzter Leistung wieder auf eine volle Leistung hochfährt sowie gegebenenfalls Schwingungszustände im Verbrauchsverhalten des Prozessors zwischen einem erhöhten (vollen) Leistungsumfang und einem reduzierten Leistungsumfang. Die beschriebenen Effekte wirken sich ebenfalls sehr negativ auf die Performanz eines Prozessors aus.

Aus der US 2016/179110 A1 ist ein Verfahren und eine Vorrichtung zum Bereitstellen eines proaktiven Stromschutzes bekannt. In einer Ausführungsform umfasst das Verfahren: vor dem Übergang in einen neuen Zustand für eine integrierte Schaltung (IC), Berechnen einer Summe von erwarteten Leistungen für eine Vielzahl von Domänen in der IC durch Berechnen eines erwarteten Stroms für jede der Vielzahl von Domänen basierend auf einer individuellen Domänenfrequenz im neuen Zustand und Multiplizieren des erwarteten Stroms mit seiner zugeordneten Spannung für jede der Vielzahl von Domänen für den neuen Zustand; Vergleichen der Summe mit einer Leistungsgrenze; und wenn die Summe größer als die Leistungsgrenze ist, dann Reduzieren der einzelnen Domänenfrequenz, die mindestens einer Domäne der Vielzahl von Domänen zugeordnet ist, um die momentane Gesamtleistung des IC unter der Leistungsgrenze zu halten.

Aus der US2008222435A1 sind Systeme und Verfahren zum Energiemanagement in einem Verarbeitungssystem bekannt. In einer Ausführungsform wird ein Zielsystem mit mehreren elektronischen Geräten innerhalb einer Nettoleistungsgrenze betrieben. Ein lokaler Controller erkennt den Stromverbrauch für jedes Gerät und übermittelt den Stromverbrauch an ein Power-Management-Modul. Das Energieverwaltungsmodul teilt die Nettoleistungsgrenze dynamisch unter den Geräten auf und übermittelt die zugeteilte Leistungsgrenze für jedes Gerät zurück an die zugeordnete lokale Steuerung. Jeder lokale Controller erzwingt die zugeteilte Leistungsgrenze für ein zugehöriges Gerät im Namen des Leistungsverwaltungsmoduls.

Die DE 102018112607 B3 betrifft ein Betriebsverfahren für ein Computersystem mit einer Systemplatine, aufweisend einen Prozessor mit einer integrierten Leistungsmanagementeinheit, einen mit dem Prozessor verbundenen Spannungsregler und einen nichtflüchtigen Speicherbaustein zum Speichern von Konfigurationswerten einer Firmware des Computersystem. Das Verfahren umfasst das Bereitstellen eines Betriebsstroms von dem Spannungsregler an den Prozessor; das Laden wenigstens eines digitalen Korrekturwerts aus dem nichtflüchtigen Speicherbaustein; das Bestimmen wenigstens eines Korrekturfaktor basierend auf dem wenigstens einen geladenen digitalen Korrekturwert; das wiederholtes Erfassen eines ersten Steuersignals, wobei das erste Steuersignal von einem durch den Spannungsregler bestimmten Ausgangsstrom abhängt; und das dynamische Anpassen einer Prozessorleistung basierend auf dem ersten Steuersignal und dem wenigstens einen bestimmten Korrekturfaktor durch die integrierte Leistungsmanagementeinheit des Prozessors.

Es ist eine Aufgabe der vorliegenden Erfindung, ein Verfahren zum Vorgeben einer Leistungsgrenze eines Prozessors eines Computersystems sowie ein solches Computersystem zu beschreiben, die die oben dargestellten Probleme und Nachteile vermeiden.

Diese Aufgabe wird gemäß einem ersten Aspekt durch ein Verfahren nach Patentanspruch 1 gelöst. Weitergehende Ausführungsformen und Implementierungen sind in den zugehörigen Unteransprüchen offenbart.

Das Verfahren umfasst den Schritt eines Erfassens einer Gesamt-Leistung des Computersystems oder einer zur Gesamt-Leistung des Computersystems korrespondierenden Größe als Gesamt-Leistungsgröße. Eine zur Gesamt-Leistung des Computersystems korrespondierende Größe ist beispielsweise ein Systemstrom bzw. Gesamtstrom des Computersystems bei einer vorgegebenen Eingangsspannung des Computersystems, d.h. ein der Stromversorgung entnommener Strom bei einer vorgegebenen bereitgestellten Spannung der Stromversorgung. Alternativ ist die zur Gesamt-Leistung des Computersystems korrespondierende Größe beispielsweise ein aus dem Systemstrom bzw. Gesamtstrom des Computersystems ermitteltes Signal. Die erfasste Gesamt-Leistungsgröße des Computersystems ist somit ein Maß für die vom Computersystem insgesamt beanspruchte elektrische Leistung.

Das Verfahren umfasst einen Schritt eines Erfassens einer Prozessor-Leistung des Prozessors oder einer zur Prozessor-Leistung des Prozessors korrespondierenden Größe als Prozessor-Leistungsgröße. Die zur Prozessor-Leistung des Prozessors korrespondierende Größe ist zum Beispiel ein Prozessorstrom, das heißt ein Strom, der vom Prozessor beansprucht wird, um eine bestimmte Prozessor-Leistung in einem bestimmten Betriebszustand erbringen zu können. Alternativ ist die zur Prozessor-Leistung des Prozessors korrespondierende Größe beispielsweise ein aus dem Prozessorstrom des Prozessors ermitteltes Signal. Die erfasste Prozessor-Leistungsgröße ist somit ein Maß für den Leistungsanteil des Prozessors im Computersystem.

Das Verfahren umfasst einen Schritt eines Bestimmens einer Differenz zwischen der Gesamt-Leistungsgröße und der Prozessor-Leistungsgröße. Diese Differenz beschreibt ein Maß für den Leistungsanteil sonstiger Verbraucher beziehungsweise weiterer Systemkomponenten getrennt vom Prozessor, das heißt ein Maß dafür, welche Leistung von weiteren Systemkomponenten abgesehen vom Prozessor innerhalb des Computersystems maßgeblich verbraucht wird.

Das Verfahren umfasst einen Schritt eines Ermittelns einer Leistungsgrenze des Prozessors anhand der Differenz zwischen der Gesamt-Leistungsgröße und der Prozessor-Leistungsgröße. Ferner umfasst das Verfahren einen Schritt eines Einstellens der ermittelten Leistungsgrenze des Prozessors. Durch die letztgenannten Maßnahmen wird eine Leistungsgrenze des Prozessors vorgegeben, die sich an dem Maß eines Leistungsverbrauchs sonstiger Systemkomponenten innerhalb des Computersystems, abgesehen vom Prozessor, orientiert. Der Leistungsverbrauch sonstiger Systemkomponenten wird, wie erläutert, über die Differenz zwischen der Gesamt-Leistungsgröße und der Prozessor-Leistungsgröße dargestellt. Die ermittelte Leistungsgrenze des Prozessors wird so eingestellt, dass der Prozessor bestmöglich unter Berücksichtigung des Leistungsverbrauchs sonstiger Systemkomponenten betrieben wird.

Ein derartiges Verfahren hat gegenüber herkömmlichen Lösungen den Vorteil, dass eine Leistungsgrenze des Prozessors unter Berücksichtigung eines Leistungsverbrauchs sonstiger Systemkomponenten innerhalb des Computersystems eingestellt beziehungsweise angepasst werden kann. Bei einem niedrigen Leistungsverbrauch sonstiger Systemkomponenten, abgesehen vom Prozessor, kann die Leistungsgrenze des Prozessors erhöht werden, während bei einem hohen Leistungsverbrauch sonstiger Systemkomponenten im Computersystem die Leistungsgrenze des Prozessors herabgesetzt wird. Auf diese Weise kann die Performanz des Prozessors optimal an eine bestehende Betriebssituation angepasst werden, ohne jedoch eine Stromversorgung und/oder Kühllösung des Computersystems zu überlasten.

Aufgrund eines Bestimmens einer Differenz zwischen der Gesamt-Leistungsgröße und der Prozessor-Leistungsgröße kann ein Leistungsanteil sonstiger Systemkomponenten des Computersystems, abgesehen vom Prozessor, auf einfache Weise ermittelt werden, ohne den jeweiligen Leistungsverbrauch sämtlicher Systemkomponenten des Computersystems separat und ggf. einzeln erfassen beziehungsweise auswerten zu müssen. Dies erlaubt eine einfache Implementierung des Verfahrens innerhalb eines Computersystems.

Die hier erläuterte Leistungsgrenze stellt beispielsweise einen oberen Leistungsgrenzwert des Prozessors dar. Dies ist beispielsweise ein oberer Grenzwert einer /Strom-/Spannungsamplitude entsprechender elektrischer Versorgungssignale des Prozessors beziehungsweise ein oberer Grenzwert einer zeitlichen Dauer einer bestimmten Leistung des Prozessors, das heißt ein Grenzwert, wie lange eine bestimmte Leistung des Prozessors vorliegt oder vorliegen darf. Die hier erläuterte Leistungsgrenze ist beispielsweise ein sogenannter PL4-Wert (Power Limit 4), das heißt eine obere Leistungsgrenze gemäß vorgegebenen Power Limits (z.B. PL1 bis PL4) des Prozessors.

In Weiterbildungen oder alternativen Implementierungen des obigen Verfahrens wird das Verfahren fortlaufend durchgeführt, wobei die Leistungsgrenze des Prozessors in Abhängigkeit von der Höhe der Differenz zwischen der Gesamt-Leistungsgröße und der Prozessor-Leistungsgröße dynamisch angepasst wird. Diese Maßnahmen haben den Vorteil, dass die Leistungsgrenze des Prozessors kontinuierlich bzw. fortlaufend in Abhängigkeit von der Höhe der Differenz zwischen der Gesamt-Leistungsgröße und der Prozessor-Leistungsgröße angepasst wird. Je nach Veränderung der Differenz zwischen der Gesamt-Leistungsgröße und der Prozessor-Leistungsgröße wird die Leistungsgrenze des Prozessors angepasst. Sinkt die Differenz beispielsweise ab, so ist dies ein Maß dafür, dass der Leistungsverbrauch der sonstigen Systemkomponenten des Computersystems neben dem Prozessor einen niedrigeren Leistungsverbrauch haben. Dementsprechend wird die Leistungsgrenze des Prozessors dynamisch erhöht. Steigt die Differenz dagegen an, so ist dies ein Maß für einen erhöhten Leistungsverbrauch der sonstigen Systemkomponenten, wobei die Leistungsgrenze des Prozessors dynamisch abgesenkt wird. Wie stark oder schwach die Leistungsgrenze des Prozessors demnach erhöht oder abgesenkt wird, erfolgt in Abhängigkeit davon, wie stark oder schwach sich die Höhe der Differenz zwischen der Gesamt-Leistungsgröße und der Prozessor-Leistungsgröße verändert.

Das Verfahren wird beispielsweise fortlaufend mehrmals pro Sekunde, in einem Intervall von mehreren Sekunden oder auch mehreren Minuten, und so weiter durchgeführt. Die erläuterten Maßnahmen haben auch den Vorteil, dass auf eine Veränderung des anteiligen Leistungsverbrauchs der sonstigen Systemkomponenten innerhalb des Computersystems, ggf. event-getriggert, reagiert werden kann. Wird beispielsweise eine (externe) Systemkomponente mit dem Computersystem verbunden oder in das Computersystem integriert (zum Beispiel ein Datenträger oder eine Erweiterungskarte), die einen bestimmten Leistungsanteil des Computersystems bezieht, so steigt der Leistungsverbrauch der sonstigen Systemkomponenten insgesamt an. Dadurch erhöht sich auch die Differenz zwischen der Gesamt-Leistungsgröße und der Prozessor-Leistungsgröße, wodurch die Leistungsgrenze des Prozessors, wie erläutert, dynamisch herabgesetzt werden kann, um dem erhöhten Leistungsverbrauch der sonstigen Systemkomponenten Rechnung zu tragen.

In Weiterbildungen oder alternativen Implementierungen des Verfahrens wird die ermittelte Leistungsgrenze in ein Register im Prozessor geschrieben. Dies ermöglicht ein einfaches Einstellen der Leistungsgrenze innerhalb des Prozessors, wodurch der Betrieb des Prozessors beeinflusst wird. Die ermittelte Leistungsgrenze wird beispielsweise in ein entsprechendes Register des Prozessors einprogrammiert. Bei etwaiger kontinuierlicher Ausführung des Verfahrens, wie oben erläutert, erfolgt auf einfache Weise ein Umprogrammieren beziehungsweise Überschreiben einer zuvor eingestellten Leistungsgrenze mit einer neu ermittelten beziehungsweise eingestellten Leistungsgrenze des Prozessors.

In Weiterbildungen beziehungsweise alternativen Implementierungen des Verfahrens wird die Gesamt-Leistungsgröße durch Messung an einer Stromversorgungsleitung des Computersystems erfasst. Diese Maßnahmen erlauben zum Beispiel eine analoge Erfassung/Messung der Gesamt-Leistungsgröße durch eine oder mehrere Messvorrichtungen an der Stromversorgungsleitung des Computersystems, die mit der Stromversorgung verbunden ist. Derartige Messvorrichtungen sind beispielsweise eine Strommessvorrichtung und/oder eine Spannungsmessvorrichtung zur Ermittlung der Gesamt-Leistungsgröße des Computersystems.

In Weiterbildungen beziehungsweise alternativen Implementierungen des Verfahrens wird die Prozessor-Leistungsgröße von einem Spannungswandler bzw. Spannungsregler bereitgestellt. Der Spannungsregler gibt beispielsweise eine Versorgungsspannung beziehungsweise einen Versorgungsstrom des Prozessors vor oder stellt diese Größen in Abhängigkeit von einer Vorgabe des Prozessors ein. Dabei wird die Prozessor-Leistungsgröße aus der vom Spannungsregler bereitgestellten Information ermittelt. Dies erlaubt ein einfaches Erfassen der Prozessor-Leistungsgröße unter Ausnutzung der Bereitstellung von Informationen durch den Spannungsregler, der den Leistungsverbrauch des Prozessors regelt. Dadurch entfällt ein etwaiger Aufwand für die Implementierung zusätzlicher Messvorrichtungen zur Erfassung der Prozessor-Leistungsgröße.

In Weiterbildungen beziehungsweise alternativen Implementierungen des Verfahrens wird die Differenz zwischen der Gesamt-Leistungsgröße und der Prozessor-Leistungsgröße von einer Differenz-Messvorrichtung, z.B. einer Differenzverstärker-Schaltung, bestimmt. Dies erlaubt eine einfache analoge Auswertung der Differenz zur Anpassung der Leistungsgrenze, wie oben erläutert.

In alternativen oder ergänzenden Implementierungen des Verfahrens werden die Gesamt-Leistungsgröße und die Prozessor-Leistungsgröße aus dem Prozessor an einen Mikrocontroller übermittelt. Beispielsweise liest der Mikrocontroller die Gesamt-Leistungsgröße und die Prozessor-Leistungsgröße aus dem Prozessor aus. Alternativ sendet (pollt) der Prozessor (ggf. in vorgegebenen Zeitabständen) aktualisierte Werte der Gesamt-Leistungsgröße und der Prozessor-Leistungsgröße an den Mikrocontroller. In diesen Implementierungen werden dem Mikrocontroller beispielsweise digitale Werte der genannten Größen geliefert. Eine derartige digitale Erfassung der genannten Größen erfolgt alternativ oder ergänzend zu einer analogen Messung der genannten Größen, wie oben erläutert. Optional erfolgen eine analoge Erfassung einzelner Größen und eine digitale Erfassung anderer Größen, ggf. mit entsprechender Analog-DigitalWandlung oder Digital-Analog-Wandlung der Größen zur weiteren Verarbeitung.

In Weiterbildungen beziehungsweise alternativen Implementierungen des Verfahrens wird die Differenz zwischen der Gesamt-Leistungsgröße und der Prozessor-Leistungsgröße von einem Mikrocontroller bestimmt. In den obigen Implementierungen, bei denen die Gesamt-Leistungsgröße und die Prozessor-Leistungsgröße aus dem Prozessor an einen Mikrocontroller übermittelt werden, können sämtliche Aufgaben in diesem Zusammenhang von einem einzelnen Mikrocontroller durchgeführt werden. Alternativ werden für die Übermittlung der erläuterten Größen und die Bestimmung der Differenz der genannten Größen mehrere verschiedene Mikrocontroller verwendet.

In diversen Implementierungen des Verfahrens, bei dem die Differenz zwischen den genannten Größen in einem Mikrocontroller bestimmt wird, erfolgt vorteilhaft jeweils die Bildung eines Mittelwertes der genannten Größen, wobei aus den jeweils gebildeten Mittelwerten schlussendlich die Differenz der genannten Größen (Gesamt-Leistungsgröße und Prozessor-Leistungsgröße) bestimmt werden kann. Ein derartiges Vorgehen hat den Vorteil, dass bei Ermittlung von digitalen Werten der genannten Größen, zum Beispiel durch Auslesen aus dem Prozessor, durchaus verschiedene Abtastfrequenzen dieser Digitalwerte vorliegen können. Insofern können einzelne Abtastwerte der genannten Größen nicht oder nur fehlerbehaftet unmittelbar durch Differenzbildung ausgewertet werden. Durch Bildung entsprechender Mittelwerte der ausgelesenen Abtastwerte der digitalisierten Größen können diese bestimmten Mittelwerte schlussendlich voneinander abgezogen werden. Eine Mittelwertbildung erfolgt beispielsweise durch eine gleitende Mittelwertbildung (englisch: moving average).

In den oben erläuterten Implementierungen, in denen die Differenz zwischen den genannten Größen von einer Differenz-Messvorrichtung bestimmt wird, wird die ermittelte Differenz als Wert beispielsweise einem nachgeschalteten Mikrocontroller übermittelt.

In Weiterbildungen beziehungsweise alternativen Implementierungen wird die ermittelte Leistungsgrenze im Prozessor von einem Mikrocontroller eingestellt. Im Falle einer digitalen Auswertung/Berechnung der entsprechenden Größen, wie oben erläutert, kann dies der Mikrocontroller sein, der auch die digitalen Werte der entsprechenden Größen ermittelt. Im Falle einer analogen Messung der entsprechenden Größen kann dies der Mikrocontroller sein, der der oben erläuterten Differenz-Messvorrichtung nachgeschaltet ist.

In Weiterbildungen beziehungsweise alternativen Implementierungen des Verfahrens kommunizieren der oder die Mikrocontroller mit dem Prozessor gemäß dem sogenannten Platform Environment Control Interface (PECI). Dadurch ist eine einfache Implementierung des Verfahrens gewährleistet. Über den PECI-Bus werden Informationen, insbesondere Systemmanagement-Daten, zwischen dem oder den Mikrocontrollern und dem Prozessor kommuniziert. Zum Beispiel liest der oder die Mikrocontroller über den PECI-Bus aus dem Prozessor bestimmte Leistungsdaten, insbesondere die oben erläuterten Leistungsgrößen, je nach Implementierung des Verfahrens, aus. Des Weiteren programmieren der oder die Mikrocontroller über den PECI-Bus zum Einstellen der ermittelten Leistungsgrenze, wie oben erläutert, bestimmte Daten oder Werte in ein oder mehrere entsprechende Register im Prozessor ein. Auf diese Weise nutzt das Verfahren den PECI-Bus zur einfachen Kommunikation zwischen den beteiligten Komponenten.

Die obige Aufgabe wird gemäß einem weiteren Aspekt durch ein Computersystem nach Patentanspruch 11 gelöst. Das Computersystem weist einen Prozessor und weitere Systemkomponenten auf. Das Computersystem ist eingerichtet, ein Verfahren der oben erläuterten Art durchzuführen. Die weiteren Systemkomponenten umfassen beispielsweise eine oder mehrere Grafik-Karten, ein oder mehrere USB-Geräte, eine oder mehrere Festplatten, einen oder mehrere Lüfter, usw. Ein solches Computersystem weist die gleichen Effekte und Vorteile auf, wie sie im Zusammenhang mit dem Verfahren oben erläutert worden sind.

Die obige Aufgabe wird gemäß einem weiteren Aspekt durch ein Computer-Programm-Produkt nach Patentanspruch 12 gelöst. Das Computer-Programm-Produkt ist eingerichtet, innerhalb eines Computersystems ausgeführt zu werden und bei dessen Ausführung ein Verfahren der oben erläuterten Art durchzuführen. Das Computer-Programm-Produkt wird beispielsweise auf einem Computersystem der oben erläuterten Art, insbesondere in einem Prozessor und/oder in einem Mikrokontroller, durchgeführt.

Sämtliche Maßnahmen, Schritte, Merkmale, Aspekte, Vorteile und Effekte des Verfahrens der oben erläuterten Art finden entsprechenden Niederschlag in strukturellen Merkmalen, Aspekten, Ausführungen, Vorteilen und Effekten des Computersystems beziehungsweise des Computer-Programm-Produkts der erläuterten Art und umgekehrt.

Die Erfindung wird nachfolgend anhand von Ausführungsbeispielen beziehungsweise Implementierungsbeispielen unter Zuhilfenahme von Figuren näher erläutert.

Es zeigen:
Figur 1 eine schematische Darstellung eines Ausführungsbeispiels eines Computersystems sowie
Figur 2 ein schematisiertes Ablaufdiagramm eines Implementierungsbeispiels eines Verfahrens zum Vorgeben einer Leistungsgrenze eines Prozessors.

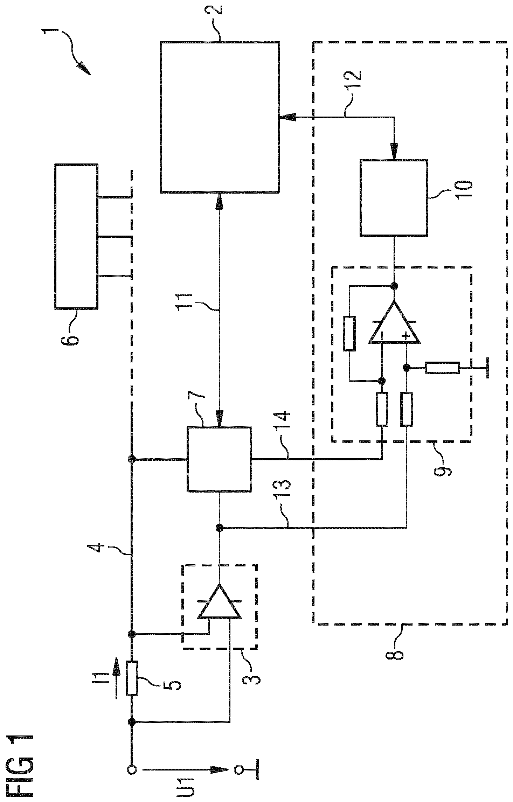

Figur 1 zeigt eine schematisierte Darstellung eines Ausführungsbeispiels eines Computersystems 1. Das Computersystem 1 umfasst einen Prozessor 2, der beispielsweise als zentrale Prozessoreinheit, CPU, des Computersystems 1 eingerichtet ist. Des Weiteren umfasst das Computersystem 1 weitere Systemkomponenten 6, die beispielsweise eine oder mehrere Grafik-Karten, USB-Geräte, Festplatten, Lüfter, usw. umfassen.

Das Computersystem 1 wird eingangsseitig über eine Eingangsspannung U1 mit einer Betriebsspannung versorgt. Die Eingangsspannung U1 wird von einer Stromversorgung, wie beispielsweise einem Netzteil (PSU) des Computersystems 1, bereitgestellt. Bei angelegter Eingangsspannung U1 entnimmt das Computersystem 1 im Betrieb einen Systemstrom beziehungsweise Gesamtstrom I1 aus der Stromversorgung. Das Computersystem 1 benötigt somit für den Betrieb eine bestimmte elektrische Leistung, die sich aus der Eingangsspannung U1 und dem Gesamtstrom I1 ergibt.

Der Prozessor 2 benötigt einen bestimmten Leistungsanteil der gesamten Systemleistung, während die sonstigen Systemkomponenten 6 einen weiteren Leistungsanteil der gesamten Systemleistung benötigen. Der Gesamtstrom I1 wird dem Prozessor 2 und den weiteren Systemkomponenten 6 über eine Stromversorgungsleitung 4 bereitgestellt. Dem Prozessor 2 ist elektrisch ein Spannungswandler beziehungsweise Spannungsregler 7 vorgeschaltet, der eine bestimmte Betriebsspannung beziehungsweise einen bestimmten Betriebsstrom für den Prozessor 2 regelt und vorgibt. Der Spannungsregler 7 ist über eine Kommunikationsverbindung 11 mit dem Prozessor 2 verbunden und kann über die Kommunikationsverbindung 11 mit dem Prozessor 2 Informationen beziehungsweise Daten austauschen. Über die Kommunikationsverbindung 11 werden beispielsweise unterschiedliche Spannungen vom Spannungsregler 7 für den Prozessor 2 eingestellt (je nach Betriebsverhalten beziehungsweise Leistungsverbrauch des Prozessors 2), beziehungsweise Stromwerte des Prozessors 2 durch den Spannungsregler 7 zurückgelesen oder bestimmte Arbeitspunkt-Einstellungen des Spannungsreglers 7 durch den Prozessor 2 angewiesen, usw. Die Kommunikationsverbindung 11 ist in dem Ausführungsbeispiel gemäß Figur 1 ein Serial Voltage Identification Interface/Bus (SVID). Der Spannungswandler beziehungsweise Spannungsregler 7 wandelt somit beispielsweise die Eingangsspannung U1 beziehungsweise einen Stromanteil des Gesamtstroms I1 in eine Prozessorspannung beziehungsweise einen Prozessorstrom zur Leistungsversorgung des Prozessors 2 und kommuniziert mit dem Prozessor 2 über den SVID-Bus.

Die weiteren Systemkomponenten 6 sind im Ausführungsbeispiel gemäß Figur 1 jeweils direkt mit der Stromversorgungsleitung 4 verbunden und beziehen beispielsweise die Eingangsspannung U1 bei einem bestimmten Stromanteil des Gesamtstroms I1.

Ein hauptsächlicher Leistungsverbrauch des Computersystems 1, das heißt nahezu die gesamte Systemleistung (abgesehen von weiteren Komponenten mit einem hier nicht berücksichtigen Leistungsverbrauch), wird somit zwischen dem Prozessor 2 und den weiteren Systemkomponenten 6 aufgeteilt. Je nach Betriebsmodus beziehungsweise Betriebsverhalten des Computersystems 1 und dessen Komponenten 2 und 6 ergeben sich somit unter Umständen ändernde beziehungsweise wechselnde Anteile eines Leistungsverbrauchs der Komponenten 2 und 6.

Für den Prozessor 2 ist ein Leistungsmanagement vorgesehen, bei dem sogenannte Power Limits (Leistungsbereiche) vorgegeben werden. Beispielsweise werden von einem BIOS beziehungsweise UEFI (Basic Input/Output System beziehungsweise Unified Extensible Firmware Interface) während des Bootvorgangs des Computersystems 1 ein oder mehrere Leistungsbereiche in ein oder mehrere entsprechende Register des Prozessors 2 einprogrammiert. Die Leistungsbereiche entsprechen beispielsweise vier Power Limits PL1, PL2, PL3 und PL4. Diese definieren Leistungsbereiche (und gegebenenfalls dazugehörige Zeitfenster), in denen der Prozessor 2 betrieben werden darf beziehungsweise kann, und welche Leistungsgrenzen eingehalten werden müssen beziehungsweise nicht überschritten werden dürfen. Die Leistungsbereiche PL1 bis PL3 sind beispielsweise als reaktive Grenzwerte definiert. Innerhalb dieser Leistungsbereiche führt der Prozessor 2 bestimmte Befehle beziehungsweise Funktionen aus, wobei beispielsweise eine Taktung (Frequenz) des Prozessors 2 in Abhängigkeit von bestimmten Befehlen angepasst wird, die ausgeführt werden sollen. Innerhalb der Leistungsbereiche PL1 bis PL3 ergibt sich somit der Leistungsverbrauch des Prozessors 2 in Abhängigkeit von der Prozessorfrequenz beziehungsweise in Abhängigkeit von den Befehlen, die innerhalb des Prozessors 2 ausgeführt werden sollen. Derartige Befehle sind beispielsweise sogenannte AVX-Befehlssätze (Advanced Vector Extensions) beziehungsweise sogenannte SIMD-Befehlssätze (Single Instruction, Multiple Data).

Der Leistungsbereich PL4 ist dagegen ein harter oberer Leistungsgrenzwert, das heißt ein elektrisches Leistungslimit, des Prozessors 2. Die Leistungsgrenze PL4 darf vom Prozessor 2 keinesfalls überschritten werden. Insofern stellt die Leistungsgrenze PL4 eine präventive Leistungsgrenze für den Prozessor 2 dar. Die Prozessorleistung wird somit an der Leistungsgrenze PL4 abgeriegelt. Prozessorfrequenzen beziehungsweise Befehle, die einen über PL4 hinausgehenden Leistungsverbrauch des Prozessors 2 erforderlich machen, sind vom Prozessor 2 nicht durchführbar und systemseitig aus Sicherheitsgründen verboten.

Die harte Leistungsgrenze PL4 bestimmt somit einen oberen Performanz-Grenzwert des Prozessors 2. Aufgrund eines Mischbetriebs im Leistungsverbrauch des Prozessors 2 sowie der sonstigen Systemkomponenten 6 muss während des Betriebs des Computersystems 1 stets gewährleistet werden, dass der gesamte Leistungsverbrauch des Computersystems 1, der sich aus der Eingangsspannung U1 und dem Gesamtstrom I1 ergibt, die am Computersystem 1 angeschlossene Stromversorgung beziehungsweise eine Kühllösung (nicht näher dargestellt) des Computersystems 1 nicht überlastet. Die obere Leistungsgrenze PL4 des Prozessors 2 ist somit derart vorzugeben, dass eine Leistungsspitze des Prozessors 2 beschränkt wird, um unter Berücksichtigung des zusätzlichen Leistungsverbrauches der weiteren Systemkomponenten 6 eine maximal bereitstellbare elektrische Leistung der Stromversorgung nicht überschreitet beziehungsweise eine maximal bereitstellbare Kühlleistung nicht überlastet. Eine statische Begrenzung der oberen Leistungsgrenze PL4 des Prozessors 2 müsste einen maximalen Leistungsverbrauch der weiteren Systemkomponenten 6 berücksichtigen, sodass die Leistungsgrenze PL4 des Prozessors 2 sehr konservativ ausfallen würde und eine Prozessor-Performanz in Betriebssituationen eines niedrigen Leistungsverbrauches der weiteren Systemkomponenten 6 unnötig begrenzen würde.

Das Computersystem 1 gemäß dem Ausführungsbeispiel in Figur 1 ist dazu eingerichtet, eine obere Leistungsgrenze des Prozessors 2 dynamisch in Abhängigkeit von dem Leistungsverbrauch der weiteren Systemkomponenten 6 anzupassen beziehungsweise einzustellen. Hierzu weist das Computersystem 1 eine Überwachungseinrichtung 8 auf. Die Überwachungseinrichtung 8 dient zum dynamischen Anpassen der oberen Leistungsgrenze PL4 des Prozessors 2. Die Überwachungseinrichtung 8 ist über eine erste Eingangsleitung 13 mit einer Messvorrichtung 3 verbunden und über eine zweite Eingangsleitung 14 mit dem Spannungsregler 7 des Prozessors 2 verbunden. Die Messvorrichtung 3 ist eingerichtet, um an der Stromversorgungsleitung 4 über einen Messwiderstand 5 den Gesamtstrom I1 zu erfassen. Diese Messung erfolgt im Beispiel von Figur 1 als indirekte Strommessung. Dabei wird eine Spannung erfasst, die am Messwiderstand 5 abfällt, wodurch unter Heranziehen des ohmschen Gesetzes der Gesamtstrom I1 durch den Messwiderstand 5 ermittelt wird. Die Messvorrichtung 3 ist somit eingerichtet, an der ersten Eingangsleitung 13 der Überwachungseinrichtung 8 ein Ausgangssignal auszugeben, das äquivalent zur Gesamt-Leistung des Computersystems 1 ist (Produkt aus Eingangsspannung U1 und erfasstem Gesamtstrom I1) beziehungsweise das eine zur Gesamt-Leistung des Computersystems 1 korrespondierende Größe ist. Das von der Messvorrichtung 3 an der Leitung 13 ausgegebene Signal entspricht somit einem Maß für die Gesamt-Leistungsgröße des Computersystems 1.

Des Weiteren ist der Spannungsregler 7 eingerichtet, an der zweiten Eingangsleitung 14 der Überwachungseinrichtung 8 ein Signal bereitzustellen, das äquivalent zur Prozessor-Leistung des Prozessors 2 ist oder eine zur Prozessor-Leistung des Prozessors 2 korrespondierende Größe ist. Beispielsweise stellt der Spannungsregler 7 an der Leitung 14 ein Signal bereit, das ein Maß für den Prozessorstrom des Prozessors 2 ist. Das Signal entspricht somit einer Prozessor-Leistungsgröße des Prozessors 2.

Die Überwachungseinrichtung 8 umfasst im Ausführungsbeispiel gemäß Figur 1 eine Differenz-Messvorrichtung 9, die beispielhaft als Differenzverstärker-Schaltung aufgebaut ist, sowie einen Mikrocontroller 10, der über eine Kommunikationsverbindung 12 mit dem Prozessor 2 verbunden ist. Der Mikrocontroller 10 ist beispielsweise ein Management-Controller zum Steuern eines Betriebsverhaltens des Prozessors 2. Die Kommunikationsverbindung 12 ist beispielsweise eine Systemmanagement-Schnittstelle zum Auslesen von bestimmten Prozessorwerten aus dem Prozessor 2, wie zum Beispiel Temperatur, Registerwerte, Leistungsdaten und so weiter. Die Kommunikationsverbindung 12 ist im Ausführungsbeispiel gemäß Figur 1 ein PECI-Bus. Über die Kommunikationsverbindung 12 ist es dem Mikrocontroller 10 möglich, Werte für vorgegebene Leistungsbereiche (PL1 bis PL4) in ein oder mehrere Register des Prozessors 2 einzuprogrammieren. Insbesondere ist der Mikrocontroller 10 eingerichtet, den PL4-Wert, wie oben erläutert, dynamisch im Prozessor 2 umzuprogrammieren beziehungsweise entsprechende Werte in einem Register des Prozessors 2 zu überschreiben, um die Leistungsgrenze PL4 des Prozessors 2 dynamisch an das Betriebsverhalten des Computersystems 1 anzupassen.

Für eine derartige Anpassung ist die Differenz-Messvorrichtung 9 eingerichtet, ein entsprechendes Ausgangssignal dem Mikrocontroller 10 bereitzustellen. Die Differenz-Messvorrichtung 9 erhält die Gesamt-Leistungsgröße an der ersten Eingangsleitung 13 und die Prozessor-Leistungsgröße an der zweiten Eingangsleitung 14 und berechnet daraus eine Differenz zwischen der Gesamt-Leistungsgröße und der Prozessor-Leistungsgröße. Das heißt, die Differenz-Messvorrichtung 9 zieht die Prozessor-Leistungsgröße an der Leitung 14 von der Gesamt-Leistungsgröße an der Leitung 13 ab. Ein Ausgangssignal, das als Maß für die Höhe der berechneten Differenz dient, wird über die Differenz-Messvorrichtung 9 dem Mikrocontroller 10 bereitgestellt. Anhand der ermittelten Höhe der Differenz ermittelt der Mikrocontroller 10 eine Leistungsgrenze des Prozessors 2, hier beispielhaft konkret einen angepassten PL4-Wert, und programmiert diese Leistungsgrenze über die Kommunikationsverbindung 12 in das entsprechende Register im Prozessor 2. Dadurch wird die entsprechend ermittelte Leistungsgrenze dynamisch im Prozessor 2 programmiert.

Das Computersystem 1 im Ausführungsbeispiel gemäß Figur 1 ist somit derart eingerichtet, dass die obere Leistungsgrenze des Prozessors 2 dynamisch angepasst werden kann in Abhängigkeit und unter Berücksichtigung eines Leistungsverbrauchs von weiteren Systemkomponenten 6 neben dem Prozessor 2. Durch das Bilden der Differenz zwischen der Gesamt-Leistungsgröße und der Prozessor-Leistungsgröße wird ein Maß für den sonstigen Leistungsverbrauch der weiteren Systemkomponenten 6 ermittelt. Mit anderen Worten wird die Prozessorleistung von einer Gesamtleistung des Computersystems 1 abzogen, wodurch eine Aussage über den restlichen Leistungsanteil der weiteren Systemkomponenten 6 möglich ist. Diese Differenzgröße wird von der Differenz-Messvorrichtung 9 ausgewertet, wodurch im Mikrocontroller 10 eine entsprechende Leistungsgrenze für den Prozessor 2 ermittelbar ist. Diese Leistungsgrenze wird durch den Mikrocontroller 10, wie erläutert, über die Kommunikationsverbindung 12 im Prozessor 2 dynamisch einprogrammiert.

Auf diese Weise ist das Computersystem 1 in der Lage, bei einem niedrigeren Leistungsverbrauch der weiteren Systemkomponenten 6 die obere Leistungsgrenze PL4 des Prozessors 2 zu erhöhen und dementsprechend bei einem höheren Leistungsverbrauch der weiteren Systemkomponenten 6 (beziehungsweise bei einem Spitzenleistungsverbrauch der weiteren Systemkomponenten 6) die obere Leistungsgrenze PL4 des Prozessors 2 abzusenken. Somit wird eine Leistungsspitze des Prozessors 2, das heißt ein oberer Leistungs-/Strom-/Spannungswert oder eine zeitliche Dauer einer entsprechenden Leistung, stets derart begrenzt, dass die Stromversorgung beziehungsweise eine Kühllösung des Computersystems 1 nicht überlastet wird und dennoch die obere Leistungsgrenze des Prozessors 2 nicht unnötig begrenzt wird. Somit ist das Computersystem 1 stets in einem sicheren Leistungsbetrieb und kann dennoch eine Performanz des Prozessors 2 in jeglichem Betriebszustand des Computersystems 1 optimal ausnutzen. Der Prozessor 2 kann somit stets an einer gegenwärtig verfügbaren oberen Leistungsgrenze betrieben werden, um eine optimale Performanz zu liefern, wobei die obere Leistungsgrenze dynamisch angepasst wird in Abhängigkeit von einem Leistungsverbrauch der sonstigen Systemkomponenten 6.

In alternativen oder ergänzenden Ausführungsformen des Ausführungsbeispiels gemäß Figur 1 ist der Mikrocontroller 10 eingerichtet, eine Gesamt-Leistungsgröße und eine Prozessor-Leistungsgröße als digitale Werte über die Kommunikationsverbindung 12 aus dem Prozessor 2 abzufragen und eine entsprechende Differenz zwischen der Gesamt-Leistungsgröße und der Prozessor-Leistungsgröße als Maß für den sonstigen Leistungsverbrauch der weiteren Systemkomponenten 6 zu berechnen. Hierbei ist der Mikrocontroller 10 vorteilhaft derart eingerichtet, dass aus mehreren Abtastwerten der digitalen Signale der Gesamt-Leistungsgröße sowie der Prozessor-Leistungsgröße jeweils ein Mittelwert gebildet wird und die entsprechende Differenz zwischen den Größen aus den jeweils erfassten Mittelwerten berechnet wird. Dies hat den Vorteil, dass die verschiedenen digitalen Signale, die unter Umständen zu verschiedenen Abtastzeitpunkten beziehungsweise Abtastfrequenzen ermittelt werden, im Mikrocontroller 10 verarbeitet werden können. In diesen Implementierungen ist es somit dem Mikrocontroller 10 möglich, allein anhand einer Kommunikation mit dem Prozessor 2 entsprechende Größen zu ermitteln, deren Differenz zu berechnen und anhand dessen wiederum über die Kommunikationsverbindung 12 eine Anpassung der Leistungsgrenze PL4 des Prozessors 2 vorzunehmen. In diesen Implementierungen kann eine analoge Erfassung der entsprechenden Leistungsgrößen über die Messvorrichtung 3, den Messwiderstand 5 sowie die Differenz-Messvorrichtung 9 entfallen. Eine digitale Erfassung der entsprechenden Größen und Bildung einer entsprechenden Differenz erfolgt im Mikrocontroller 10 beispielsweise als reine Softwarelösung. Hierbei ist ein entsprechendes Computerprogramm beziehungsweise Ablaufprogramm im Mikrocontroller 10 programmiert.

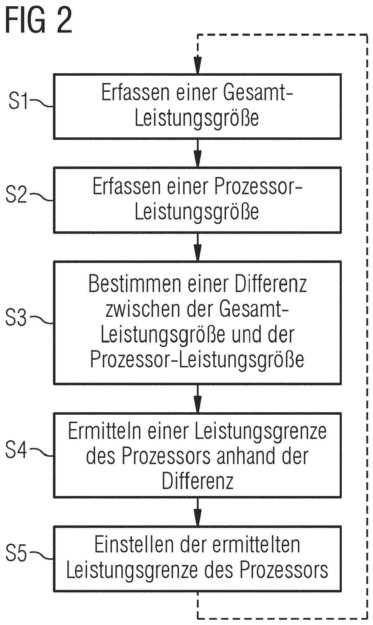

Figur 2 zeigt ein schematisiertes Ablaufdiagramm eines Verfahrens zum Vorgeben einer Leistungsgrenze eines Prozessors eines Computersystems. Ein solches Verfahren wird beispielsweise innerhalb eines Computersystems 1 gemäß Figur 1 durchgeführt.

In einem Schritt S1 des Verfahrens erfolgt ein Erfassen einer Gesamt-Leistungsgröße des Computersystems. Dies geschieht beispielsweise mittels der Messvorrichtung 3 und des Messwiderstands 5 durch analoge Messung, wie zum Ausführungsbeispiel des Computersystems 1 gemäß Figur 1 oben erläutert.

In einem Schritt S2 des Verfahrens erfolgt ein Erfassen einer Prozessor-Leistungsgröße. Dies geschieht beispielsweise durch Übermittlung einer entsprechenden Größe vom Spannungsregler 7 an die Überwachungseinrichtung 8, wie zum Ausführungsbeispiel des Computersystems 1 gemäß Figur 1 oben erläutert.

In einem Schritt S3 des Verfahrens erfolgt ein Bestimmen einer Differenz zwischen der Gesamt-Leistungsgröße und der Prozessor-Leistungsgröße. Dieser Schritt erfolgt beispielsweise mittels der Differenz-Messvorrichtung 9 auf analoge Art und Weise, wie zum Ausführungsbeispiel des Computersystems 1 gemäß Figur 1 oben erläutert.

Im Schritt S4 des Verfahrens erfolgt ein Ermitteln einer Leistungsgrenze des Prozessors anhand der Differenz zwischen der Gesamt-Leistungsgröße und der Prozessor-Leistungsgröße. Dieser Schritt erfolgt beispielsweise innerhalb des Mikrocontrollers 10 gemäß dem Ausführungsbeispiel des Computersystems 1 in Figur 1.

In einem weiteren Schritt S5 des Verfahrens erfolgt schließlich ein Einstellen der ermittelten Leistungsgrenze des Prozessors. Dieser Schritt erfolgt beispielsweise ebenfalls innerhalb des Mikrocontrollers 10 gemäß dem Ausführungsbeispiel des Computersystems 1 aus Figur 1.

Der Verfahrensablauf gemäß Figur 2 erfolgt vorteilhaft wiederholt bzw. kontinuierlich, wobei die Schritte S1 bis S5 sequentiell durchgeführt werden und nach der Durchführung des Schrittes S5 wiederum zu Schritt S1 zurückgekehrt wird und ein neuer Durchlauf der Schritte S1 bis S5 durchgeführt wird.

Ein derartiges Verfahren hat die Vorteile und Effekte, wie sie auch zum Ausführungsbeispiel des Computersystems 1 gemäß Figur 1 erläutert worden sind. Insbesondere ermöglicht das Verfahren gemäß dem Implementierungsbeispiel aus Figur 2 ein dynamisches Anpassen der Leistungsgrenze des Prozessors in Abhängigkeit von einem Leistungsverbrauch weiterer Systemkomponenten neben dem Prozessor. Die Differenz zwischen der Gesamt-Leistungsgröße und der Prozessor-Leistungsgröße (siehe Schritt S3) wird als Maßzahl für den Leistungsverbrauch der weiteren Systemkomponenten ermittelt. Anhand dieser Maßzahl kann eine passende Leistungsgrenze des Prozessors in Schritt S4 ermittelt werden und in Schritt S5 im Prozessor eingestellt werden.

In alternativen Implementierungen des Verfahrens wird Schritt S2 vor Schritt S1 durchgeführt oder beide Schritte S1 und S2 parallel durchgeführt. In weiteren alternativen oder ergänzenden Implementierungen werden einzelne oder sämtliche der Schritte S1 bis S5 innerhalb eines Mikrocontrollers, zum Beispiel innerhalb des Mikrocontrollers 10 gemäß dem Ausführungsbeispiel des Computersystems 1 aus Figur 1, durchgeführt.

In weiteren alternativen oder ergänzenden Implementierungen erfolgen einzelne der Schritte S1 bis S5 durch analoge Messverfahren und andere der Schritte S1 bis S5 innerhalb von digitalen Signalerfassungsverfahren beziehungsweise innerhalb eines Computerprogramms beziehungsweise Ablaufprogramms, das beispielsweise innerhalb des Prozessors 2 beziehungsweise innerhalb des Mikrocontrollers 10 gemäß Figur 1 programmiert ist. Analoge Messverfahren haben den Vorteil, dass sie unmittelbar und rasch durchführbar sind, weil entsprechende Signalwerte kontinuierlich erfasst werden können. Allerdings müssen hierbei unter Umständen analoge Signalwerte in digitale Signale umgewandelt werden, um entsprechende Berechnungen durchführen zu können.

Digitale Signalverarbeitungsverfahren haben den Vorteil, dass sie innerhalb von bestehenden Komponenten, zum Beispiel innerhalb eines Mikrocontrollers 10 gemäß Figur 1, durchgeführt werden können. Es ist hierbei ein gewisser Zeitverzug aufgrund von Signalabtastungen beziehungsweise von Mittelwertbildungen aus den abgetasteten Signalwerten (zum Beispiel über ein gleitendes Mittelwert-Verfahren, Moving Average) zu beachten. Ein weiterer Zeitverzug kann auch dadurch entstehen, dass der Prozessor 2 (vergleiche Figur 1) lediglich in bestimmten Zeitabständen aktualisierte Signalwerte beziehungsweise Leistungswerte liefert. Je nach Implementierung bieten somit analoge und/oder digitale Verarbeitungen der erläuterten Signale entsprechende Vorteile.

Der Verfahrensablauf gemäß dem Implementierungsbeispiel aus Figur 2 und gemäß den weiter erläuterten Implementierungen kann beispielsweise mehrmals innerhalb einer Sekunde, mehrmals innerhalb einer Minute oder mehrmals innerhalb einer Stunde, und so weiter durchgeführt werden. In einem alternativen Implementierungsbeispiel wird das Verfahren dadurch getriggert, dass eine Veränderung einer Leistungsverteilung innerhalb des Computersystems 1, d.h. eine Veränderung einer Leistungsaufnahme beziehungsweise eines Leistungsverbrauches an einer oder mehreren der Systemkomponenten (vergleiche Komponenten 6 in Figur 1) oder innerhalb des Prozessors 2 festgestellt wird. Dieser Veränderung der Leistungsaufnahme kann dadurch Rechnung getragen werden, dass verfahrensgemäß die Leistungsgrenze des Prozessors entsprechend angepasst wird. Das Verfahren kann zum Beispiel Event-getriggert sein, wenn eine oder mehrere der weiteren Systemkomponenten (Komponenten 6 gemäß Figur 1) im Computersystem 1 angeschlossen oder vom Computersystem 1 getrennt werden.

Sämtliche erläuterten Ausführungsformen beziehungsweise Implementierungen sind lediglich beispielhaft gewählt.

### Bezugszeichenliste

- 1: Computersystem
- 2: Prozessor
- 3: Messvorrichtung
- 4: Stromversorgungsleitung
- 5: Messwiderstand
- 6: weitere Systemkomponenten
- 7: Spannungsregler des Prozessors
- 8: Überwachungseinrichtung
- 9: Differenz-Messvorrichtung
- 10: Mikrocontroller
- 11: Kommunikationsverbindung
- 12: Kommunikationsverbindung
- 13: erste Eingangsleitung der Überwachungseinrichtung
- 14: zweite Eingangsleitung der Überwachungseinrichtung
- I1: Gesamtstrom
- U1: Eingangsspannung

## Patentansprüche

1. Verfahren zum Vorgeben einer Leistungsgrenze eines Prozessors (2) eines Computersystems (1) mit den Schritten:
- Erfassen einer Gesamt-Leistung des Computersystems (1) oder einer zur Gesamt-Leistung des Computersystems (1) korrespondierenden Größe (I1) als Gesamt-Leistungsgröße,
- Erfassen einer Prozessor-Leistung des Prozessors (2) oder einer zur Prozessor-Leistung des Prozessors (2) korrespondierenden Größe als Prozessor-Leistungsgröße,
- Bestimmen einer Differenz zwischen der Gesamt-Leistungsgröße und der Prozessor-Leistungsgröße,
- Ermitteln einer Leistungsgrenze des Prozessors (2) anhand der Differenz zwischen der Gesamt-Leistungsgröße und der Prozessor-Leistungsgröße, sowie
- Einstellen der ermittelten Leistungsgrenze des Prozessors (2) .

2. Verfahren nach Anspruch 1, wobei das Verfahren fortlaufend durchgeführt wird und die Leistungsgrenze des Prozessors (2) in Abhängigkeit von der Höhe der Differenz zwischen der Gesamt-Leistungsgröße und der Prozessor-Leistungsgröße dynamisch angepasst wird.

3. Verfahren nach Anspruch 1 oder 2, wobei die ermittelte Leistungsgrenze in ein Register im Prozessor (2) geschrieben wird.

4. Verfahren nach einem der Ansprüche 1 bis 3, wobei die Gesamt-Leistungsgröße durch Messung an einer Stromversorgungsleitung (4) des Computersystems (2) erfasst wird.

5. Verfahren nach einem der Ansprüche 1 bis 4, wobei die Prozessor-Leistungsgröße von einem Spannungsregler (7) bereitgestellt wird.

6. Verfahren nach einem der Ansprüche 1 bis 5, wobei die Differenz zwischen der Gesamt-Leistungsgröße und der Prozessor-Leistungsgröße von einer Differenz-Messvorrichtung (9) bestimmt wird.

7. Verfahren nach einem der Ansprüche 1 bis 6, wobei die Gesamt-Leistungsgröße und die Prozessor-Leistungsgröße aus dem Prozessor (2) an einen Mikrokontroller (10) übermittelt werden.

8. Verfahren nach einem der Ansprüche 1 bis 7, wobei die Differenz zwischen der Gesamt-Leistungsgröße und der Prozessor-Leistungsgröße von einem Mikrokontroller (10) bestimmt wird.

9. Verfahren nach einem der Ansprüche 1 bis 8, wobei die ermittelte Leistungsgrenze im Prozessor (2) von einem Mikrokontroller (10) eingestellt wird.

10. Verfahren nach Anspruch 9, wobei der Mikrokontroller (10) mit dem Prozessor (2) gemäß dem Platform Environment Control Interface (12) kommuniziert.

11. Computersystem (1) mit einem Prozessor (2) und mit weiteren Systemkomponenten (6), wobei das Computersystem (1) eingerichtet ist, ein Verfahren nach einem der Ansprüche 1 bis 10 durchzuführen.

12. Computer-Programm-Produkt, das eingerichtet ist innerhalb eines Computersystems (1) ausgeführt zu werden und bei dessen Ausführung ein Verfahren nach einem der Ansprüche 1 bis 10 durchführt.

## Claims

1. A method for specifying a power limit of a processor (2) of a computer system (1), comprising the steps:
- detecting a total power of the computer system (1) or a variable (I1) corresponding to the total power of the computer system (1) as a total power variable,
- detecting a processor power of the processor (2) or a variable corresponding to the processor power of the processor (2) as a processor power variable,
- determining a difference between the total power variable and the processor power variable,
- establishing a power limit of the processor (2) using the difference between the total power variable and the processor power variable, and
- setting the established power limit of the processor (2) .

2. The method according to claim 1, wherein the method is performed continuously and the power limit of the processor (2) is dynamically adapted as a function of the amount of the difference between the total power variable and the processor power variable.

3. The method according to claim 1 or 2, wherein the established power limit is written to a register in the processor (2).

4. The method according to any of claims 1 to 3,
wherein the total power variable is detected by measurement on a power supply line (4) of the computer system (2).

5. The method according to any of claims 1 to 4,
wherein the processor power variable is provided by a voltage regulator (7).

6. The method according to any of claims 1 to 5,
wherein the difference between the total power variable and the processor power variable is determined by a differential measuring device (9).

7. The method according to any of claims 1 to 6,
wherein the total power variable and the processor power variable are transmitted from the processor (2) to a microcontroller (10).

8. The method according to any of claims 1 to 7,
wherein the difference between the total power variable and the processor power variable is determined by a microcontroller (10).

9. The method according to any of claims 1 to 8,
wherein the established power limit is set in the processor (2) by a microcontroller (10).

10. The method according to claim 9, wherein the microcontroller (10) communicates with the processor (2) according to the Platform Environment Control Interface (12).

11. A computer system (1) comprising a processor (2) and additional system components (6), wherein the computer system (1) is configured to perform a method according to any of claims 1 to 10.

12. A computer program product which is configured to be executed within a computer system (1) and, upon execution of which, performs a method according to any of claims 1 to 10.

## Revendications

1. Procédé de spécification d'une limite de puissance d'un processeur (2) d'un système informatique (1) comprenant les étapes :
- saisie d'une puissance totale du système informatique (1) ou d'une grandeur (I1) correspondant à la puissance totale du système informatique (1) en tant que grandeur de puissance totale,
- saisie d'une puissance de processeur du processeur (2) ou d'une grandeur correspondant à la puissance de processeur du processeur (2) en tant que grandeur de puissance de processeur,
- détermination d'une différence entre la grandeur de puissance totale et la grandeur de puissance de processeur,
- établissement d'une limite de puissance du processeur (2) à l'aide de la différence entre la grandeur de puissance totale et la grandeur de puissance de processeur, ainsi que
- réglage de la limite de puissance établie du processeur (2) .

2. Procédé selon la revendication 1, sachant que le procédé est effectué en continu et la limite de puissance du processeur (2) est adaptée dynamiquement en fonction de la hauteur de la différence entre la grandeur de puissance totale et la grandeur de puissance de processeur.

3. Procédé selon la revendication 1 ou 2, sachant que la limite de puissance établie est écrite dans un registre dans le processeur (2).

4. Procédé selon l'une des revendications 1 à 3, sachant que la grandeur de puissance totale est saisie par mesure au niveau d'une ligne d'alimentation en courant (4) du système informatique (2).

5. Procédé selon l'une des revendications 1 à 4, sachant que la grandeur de puissance de processeur est mise à disposition par un régulateur de tension (7).

6. Procédé selon l'une des revendications 1 à 5, sachant que la différence entre la grandeur de puissance totale et la grandeur de puissance de processeur est déterminée par un dispositif de mesure de différence (9).

7. Procédé selon l'une des revendications 1 à 6, sachant que la grandeur de puissance totale et la grandeur de puissance de processeur sont transmises depuis le processeur (2) à un microcontrôleur (10).

8. Procédé selon l'une des revendications 1 à 7, sachant que la différence entre la grandeur de puissance totale et la grandeur de puissance de processeur est déterminée par un microcontrôleur (10).

9. Procédé selon l'une des revendications 1 à 8, sachant que la limite de puissance établie est réglée dans le processeur (2) par un microcontrôleur (10).

10. Procédé selon la revendication 9, sachant que le microcontrôleur (10) communique avec le processeur (2) selon la *Platform Environment Control Interface* (12).

11. Système informatique (1) comprenant un processeur (2) et des composants système (6) supplémentaires, sachant que le système informatique (1) est configuré pour effectuer un procédé selon l'une des revendications 1 à 10.

12. Produit de programme informatique qui est configuré pour être exécuté au sein d'un système informatique (1) et lors de l'exécution duquel un procédé selon l'une des revendications 1 à 10 est effectué.
